# EUROPÄISCHE PATENTSCHRIFT

(11) **EP 3 554 753 B1**
(45) Veröffentlichungstag und Bekanntmachung des Hinweises auf die Patenterteilung: **17.11.2021**
(21) Anmeldenummer: 18700963.4
(22) Anmeldetag: 15.01.2018
(51) Int. Cl.: B23K 11/06, B23K 11/25, B23K 11/36

(54) **VERFAHREN UND VORRICHTUNG ZUR ROLLNAHTSCHWEISSUNG VON BEHÄLTERZARGEN**
METHOD OF AND DEVICE FOR ROLL WELDING OF CONTAINER BODIES
PROCÉDÉ ET DISPOSITIF DE SOUDAGE À LA MOLETTE DE CORPS DE RÉCIPIENTS

(30) Priorität: 28.04.2017 CH 5782017
(43) Veröffentlichungstag der Anmeldung: 23.10.2019
(73) Patentinhaber: Soudronic AG, 8962 Bergdietikon (CH)
(72) Erfinder: KROCKER, Carsten, 8962 Bergdietikon (CH); TAIANA, Peter, 8962 Bergdietikon (CH)
(74) Vertreter: Naiu, Radu Mircea
(86) Internationale Anmeldenummer: PCT/CH2018/000002
(87) Internationale Veröffentlichungsnummer: WO 2018/195674

(56) Entgegenhaltungen:
- EP-A1- 0 566 844
- EP-A1- 2 243 584
- JP-A- S55 160 281
- US-A- 4 573 359
- US-A- 5 335 422
- US-A1- 2014 360 279

## Beschreibung

Die Erfindung betrifft ein Verfahren zur Rollnahtschweissung von Behälterzargen gemäss Oberbegriff des Anspruchs 1. Ferner betrifft die Erfindung eine Vorrichtung für das Rollnahtschweissen von Behälterzargen gemäß dem Oberbegriff des Anspruchs 6.

### Hintergrund

Vorrichtungen und Verfahren der eingangs genannten Art sind bekannt. Bei der Schweissung der Naht von Behälterzargen wird generell eine möglichst geringe Überlappung der Blechkanten des zur Behälterzarge gerundeten Blechs angestrebt, um eine kompakte Naht zu erhalten. Dabei besteht allerdings die Gefahr, dass durch den Druck der Schweissrollen der Widerstandsschweissmaschine, und durch das Erweichen des Blechs der Behälterzarge im Schweisspunkt innerhalb der Überlappung, die Blechkanten seitlich ausweichen und voneinander abgleiten. Um das zu verhindern, wird die Zarge im Schweissbereich durch ein Kalibrierwerkzeug geführt, das aus kranzartig angeordneten Profilrollen gebildet ist, und deshalb auch Kalibrierkranz genannt wird. Die Profilrollen stellen um die Behälterzarge herum weitgehend lückenlosen Kontakt zu deren Umfang her, um das Ausweichen des Blechs der Behälterzarge nach aussen infolge des Drucks der Schweissrollen zu verhindern. Der Kalibrierkranz besteht in der Regel aus zwei zueinander justierbaren Hälften und ist ein auf einen bestimmten Behälterzargendurchmesser ausgelegtes Werkzeug. Die anfängliche Überlappung der Blechkanten jeder Behälterzarge wird beim Transport zur Schweissmaschine durch das Kopfstück am Ende der sogenannten Z-Schiene bestimmt. Die Z-Schiene übernimmt auf bekannte Weise die Führung der noch nicht verschweissten, gerundeten Behälterzargen im Unterarm der Schweissmaschine. Dieser Unterarm trägt auch die untere Schweissrolle. Zwischen dem Kopfstück bzw. dem Ende des Unterarms und der von den Schweissrollen definierten sogenannten "Schweissebene" besteht keine Führung der Blechkanten der Behälterzarge im Unterarm. Die Kontaktzone des Kalibrierwerkzeugs mit den Behälterzargen, die sogenannte "Ebene" des Kalibrierwerkzeugs bzw. Kalibrierkranzes, ist kurz vor den Schweissrollen angeordnet, um die Lage der überlappenden Blechkanten der jeweiligen Behälterzarge bereits vor der Schweissebene zu stabilisieren. Die vom Kalibrierkranz auf die Behälterzarge ausgeübte Kraft bedingt eine Gegenkraft, die von der elastischen Verformung des Behälterzargenmaterials beim Eintritt der jeweiligen Behälterzarge in das Kalibrierwerkzeug erzeugt wird, da die vom Kopfstück vorgegebene Überlappung noch etwas geringer ist, als die vom Kalibrierwerkzeug für die Schweissung vorgegebene Überlappung. Die Nahtqualität bei der Schweissung von Behälterzargen ist von vielen Parametern abhängig, so der im Kopfstück eingestellten Überlappung, der Geometrie des Kalibrierkranzes und dessen Abstand von der Schweissebene, dem Höhenversatz von Schweissrollen, Kalibrierkranz und Kopfstück zueinander, der Schweisskraft sowie der Schweissstromfrequenz, der Schweissstromform und Schweissstromstärke. Im Bereich dieser Parameter gibt es mehrere Möglichkeiten, eine gute Schweissnaht zu erzeugen, wobei häufig Erfahrungswerte des Betreibers der Vorrichtung eine grosse Rolle spielen. Fehlen diese oder ändern Rahmenbedingungen, wie zum Beispiel die Blechqualität, so kann die Suche nach einer guten Einstellung mittels der Herstellung und Prüfung von Testzargen schwierig und langwierig werden. Es zeigt sich, dass dabei oft eine zu hohe Kalibrierkraft eingestellt wird, was mit höherer Schweisskraft und höherem Schweissstrom kompensiert wird. Dies kann dazu führen, dass der Herstellungsprozess für die Behälterzargen nicht mehr dauerhaft stabil läuft und dass ein hoher Verschleiss an der Vorrichtung entsteht.

Bei der Herstellung von Behälterzargen können mehrere Störgrössen einen Einfluss auf die Schweissung der Längsnaht haben. EP 2 243 584 A1 (Basis des Oberbegriffes der Ansprüche 1 und 6) nennt solche Störgrössen und ordnet diesen Möglichkeiten für deren Kompensation zu. Insbesondere werden Geometriefehler der Bleche, bzw. Fehler beim Blechzuschnitt, als eine Störgrösse erwähnt. Zur Erkennung von Geometriefehlern wird - neben anderen Möglichkeiten - auch eine Kraftmessung an einer Kalibrierrolle im Kalibrierwerkzeug der Widerstandsschweissmaschine in Betracht gezogen und es werden die entsprechenden Kompensationsmassnahmen angegeben, damit trotz des Geometriefehlers eine korrekte Dosenzarge hergestellt werden kann.

### Darstellung der Erfindung

Der Erfindung liegt die Aufgabe zu Grunde, einerseits die Einstellung der Vorrichtung zur Herstellung von Behälterzargen zu erleichtern und andererseits im Betrieb bei der Herstellung von grossen Stückzahlen von Behälterzargen auf Grund eines Überlappungsfehlers allenfalls fehlerhaft geschweisste Behälterzargen ermitteln zu können.

Ein Verfahren zur Herstellung von Behälterzargen gemäß der Erfindung ist im Anspruch 1 definiert.

Dies erlaubt es auf einfache Weise, die Kalibrierkraft so einzustellen, dass eine Überlappung erzielt wird, die weder zu gering noch zu gross ist, was auf diese Weise auch durch eine Bedienungsperson mit wenig Erfahrung durchführbar ist. Es ist damit möglich bei der Einrichtung, mit weniger Testzargen zu einer geeigneten Einstellung der Herstellvorrichtung zu gelangen und eine Einstellung zu finden, die unnötigen Verschleiss vermeidet und in der Produktion stabil läuft. Während der Produktion können Behälterzargen ermittelt werden, bei denen die Überlappung ausserhalb gewünschter Werte liegt und die entsprechenden Behälterzargen können nach der Schweissung aus der Serie entfernt werden.

Dabei wird so vorgegangen, dass insbesondere die auf alle Kalibrierrollen ausgeübte Kraft gemessen wird.

Eine besonders einfache Einstellbarkeit der Herstellvorrichtung und einfache Erkennbarkeit von allenfalls fehlerhaft geschweissten Behälterzargen ergibt sich, wenn die Überschreitung oder Unterschreitung eines vorbestimmten Grenzwertes für das Kraftmesssignal als Angabe verwendet wird, dass die Überlappungsbreite der Zarge ausserhalb eines Sollwerts liegt.

Wie erläutert wird das Verfahren insbesondere so ausgeführt, dass es auf Testbehälterzargen angewendet und zur Einstellung des Kalibrierwerkzeugs vor Aufnahme der Serienproduktion von Behälterzargen angewendet wird. Ferner wird das Verfahren insbesondere so ausgeführt, dass es auf Behälterzargen während der Serienproduktion von Behälterzargen angewendet wird und Behälterzargen, deren Überlappungsbreite ausserhalb eines vorbestimmten unteren oder oberen Grenzwerts liegen, nach der Schweissung aus der Serie entfernt werden.

Der Erfindung liegt weiter die Aufgabe zu Grunde, eine Herstellvorrichtung für Behälterzargen zu schaffen, die eine einfache Einstellbarkeit für die Herstellung von Behälterzargen aufweist und andererseits im Betrieb bei der Herstellung von grossen Stückzahlen von Behälterzargen die Abgabe von allenfalls auf Grund eines Überlappungsfehlers fehlerhaft geschweisste Behälterzargen vermeidet.

Eine Vorrichtung zur Herstellung von Behälterzargen gemäß der Erfindung ist im Anspruch 6 definiert.

Eine derartige Vorrichtung erlaubt es auch einer Bedienungsperson mit wenig Erfahrung auf einfache Weise die Kalibrierkraft so einzustellen, dass eine Überlappung erzielt wird, die weder zu gering noch zu gross ist. Es ist damit möglich, mit weniger Testzargen zu einer geeigneten Einrichtung der Herstellvorrichtung zu gelangen und eine Einrichtung zu finden, die unnötigen Verschleiss vermeidet und in der Produktion stabil läuft. Während der Produktion können Behälterzargen ermittelt werden, bei denen die Überlappung ausserhalb gewünschter Werte liegt und die entsprechenden Behälterzargen können nach der Schweissung aus der Serie entfernt werden.

Die Kraftmesseinrichtung kann zur Auswertung des Signals ausgestaltet sein oder die Vorrichtung kann einen Schweissmonitor aufweisen, welcher mit der Kraftmesseinrichtung verbunden und zur Auswertung des Kraftmesssignals ausgebildet ist. Es ist auch möglich, dass die Vorrichtung eine Steuereinrichtung aufweist, welche mit der Kraftmesseinrichtung verbunden und zur Auswertung des Kraftmesssignals ausgebildet ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 grob schematisch einen Teil einer Vorrichtung zur Herstellung von Behälterzargen;
Figur 2 eine schaubildliche Darstellung eines Kalibrierwerkzeugs in Transportrichtung gesehen;
Figur 3 eine schematische Darstellung eines Kalibrierwerkzeugs und der Kraftmesseinrichtung; und
Figur 4 eine Darstellung des Kraftverlaufs über die Zeit bzw. über aufeinander folgender Behälterzargen im Kalibrierwerkzeug.

### Weg(e) zur Ausführung der Erfindung

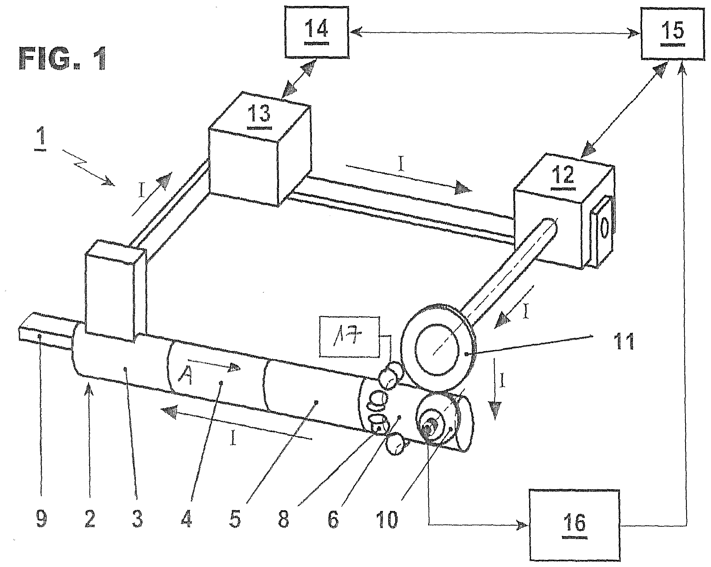

Figur 1 zeigt das Vorgehen bei der Herstellung von Behälterzargen, welche mit überlappenden Kanten längsnahtverschweisst werden. Die Vorrichtung 1 weist eine Widerstandsschweissmaschine mit Schweissrollen 10 und 11 auf. Die untere Schweissrolle 10, die von der jeweiligen Zarge umgeben ist, ist daher in der Figur eigentlich nicht sichtbar; sie ist aber in der Zeichnung zur besseren Erläuterung sichtbar dargestellt, wie wenn die Zarge durchsichtig wäre. Diese Schweissrolle 10 ist an dem nicht dargestellten Unterarm der Schweissmaschine gelagert. Die obere Schweissrolle 11 ist angetrieben drehbar gelagert und die Kraft, mit welcher sie auf die untere Schweissrolle gepresst wird, ist einstellbar, um die Schweisskraft einstellen zu können. Der Antrieb und die Schweisskrafteinstellung durch eine entsprechende Anordnung sind mit dem Kasten 12 dargestellt. In der Regel ist ferner eine Drahtzwischenelektrode für das Schweissen vorgesehen, welche über die Schweissrollen läuft. Dies ist dem Fachmann bekannt und ist hier zur Vereinfachung der Zeichnung nicht dargestellt. Die Folge 2 von Behälterzargenrohlingen 3 bis 6, die von einer nicht dargestellten Rundmaschine der Vorrichtung 1 gebildet worden sind, wird entlang der sogenannten Z-Schiene 9 der Transporteinrichtung der Vorrichtung 1 zur Schweissmaschine in Richtung auf die Schweissrollen 10 und 11 transportiert. Die Z-Schiene ist in der Figur 1 nur angedeutet und es ist zur Vereinfachung der Zeichnung nicht dargestellt, wie die Kanten der Behälterzargenrohlinge in der Z-Schiene geführt sind. Dies ist dem Fachmann aber bekannt. Die Behälterzargenrohlinge der Folge 2 werden mit geringem Abstand voneinander entlang der Z-Schiene 9 transportiert, wobei die dem Fachmann bekannte Transporteinrichtung - abgesehen von der Z-Schiene 9 - hier nicht dargestellt ist. Vor den Schweissrollen 10, 11 ist das Kalibrierwerkzeug 8 vorgesehen, welches in Figur 1 nur schematisch dargestellt ist. Die Z-Schiene 9, welche die zu verschweissenden Längskanten der Behälterzargen in Überlappung bringt und das Kalibrierwerkzeug 8 bereiten die Behälterzargenrohlinge für die Schweissung so vor, dass die Kantenlage für die Schweissung korrekt ist und während des Schweissvorgangs erhalten bleibt. Die Längsnaht der Behälterzarge 6 wird in der Figur 1 geschweisst und diese Zarge verlässt nachfolgend die Schweissmaschine und wird mit den dem Fachmann bekannten Schritten zum fertigen Behälter weiter verarbeitet. Die Behälterzargen 3, 4 und 5 sind noch Rohlinge mit noch nicht verschweissten, überlappenden Kanten.

Anstelle einer Überlappschweissung von überlappenden Kanten könnte auch eine Stumpfschweissung von aneinander anliegenden Kanten erfolgen, wobei dann die Z-Schiene durch eine sogenannte S-Schiene ersetzt ist.

Die untere Schweissrolle 10 ist in der Regel um eine starr gelagerte Drehachse drehbar, die obere Schweissrolle 11 ist federnd und angetrieben drehbar gelagert und erlaubt die Einstellung der Schweisskraft mittels der erläuterten Antriebseinrichtung und Schweisskrafteinstelleinrichtung 12, die mit der Steuerung 15 der Schweissmaschine verbunden ist. Der von einer Schweissstromquelle 14 mit einem Schweisstransformator 13 bereit gestellte Schweissstrom I wird über Stromschienen zu der oberen Schweissrolle 11 geführt, fliesst über die zu verschweissenden Kanten der Behälterzarge zur unteren Schweissrolle 10 und wird über den nicht dargestellten Unterarm der Schweissmaschine und weitere Stromschienen wieder zum Schweissstromtransformator 13 geführt. Für die Steuerung der Vorrichtung und insbesondere deren Schweissmaschine ist die erwähnte Steuerung 15 vorgesehen. Ein sogenannter Schweissmonitor 16, der Teil der Steuerung 15 sein kann, kann Daten der Schweissung erfassen und an die Steuerung 15 abgeben. Dies ist bekannt. Gemäss der vorliegenden Erfindung ist eine Kraftmesseinrichtung 17 vorgesehen, welche die von der jeweiligen Dosenzarge auf mindestens eine Kalibrierrolle ausgeübte Kraft misst. Und es ist vorgesehen, dass die gemessene Kraft als Indikator für die Überlappungsbreite der jeweiligen Dosenzarge ausgewertet wird. Die Auswertung der gemessenen Kraft kann in der Kraftmesseinrichtung 17 selber erfolgen und allenfalls angezeigt werden. Die Kraftmesseinrichtung kann auch mit dem Schweissmonitor 16 verbunden sein, damit das Kraftmesssignal im Schweissmonitor ausgewertet und allenfalls angezeigt wird. Die Kraftmesseinrichtung kann auch mit der Steuerung 15 verbunden sein, damit das Kraftmesssignal in der Steuerung 15 ausgewertet und allenfalls angezeigt wird.

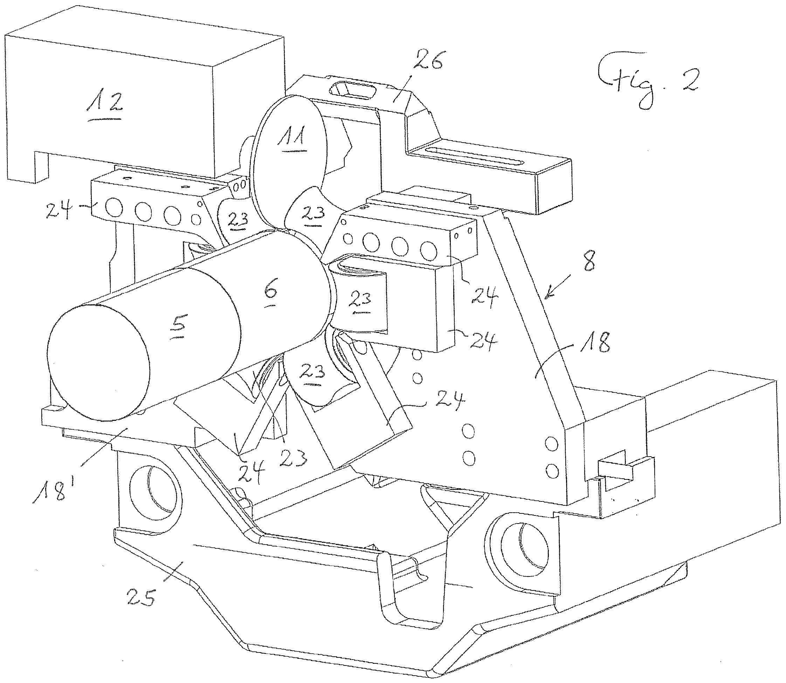

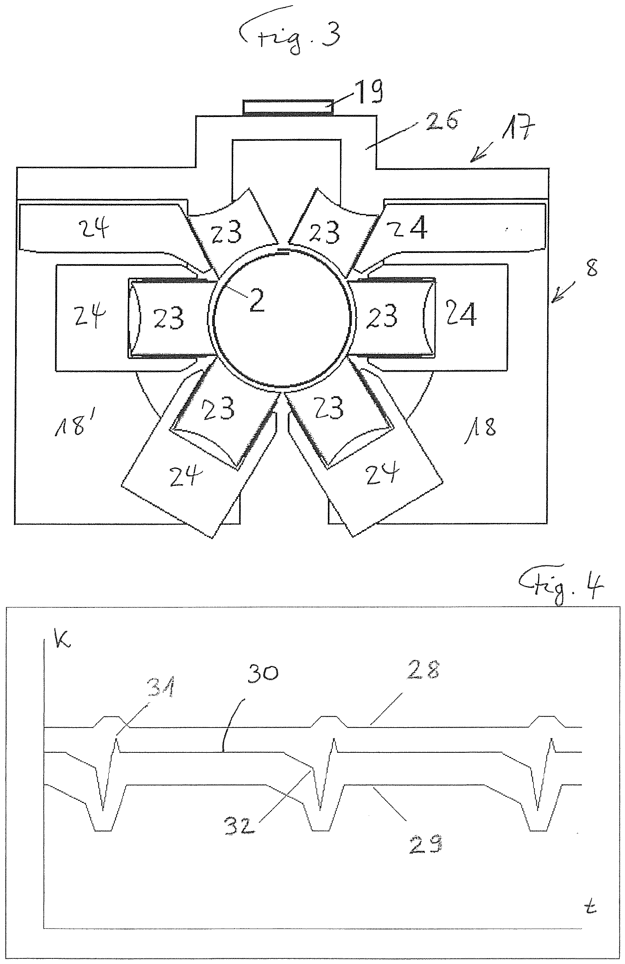

Figur 2 zeigt in einer schaubildlichen Darstellung das Kalibrierwerkzeug 8 mit Kalibrierrollen 23, die jeweils in Lagerungen 24 drehbar gehalten sind. Die Lagerungen 24 sind an einem Gestell 25 der Schweissmaschine der Vorrichtung 1 gehalten. Gezeigt ist in Figur 2 nur die obere Schweissrolle 11 und es sind zwei Behälterzargen 5, 6 dargestellt, wobei die in Transportrichtung vordere Dosenzarge kurz vor dem Eintritt in das Kalibrierwerkzeug dargestellt ist. Das Kalibrierwerkzeug ist im Beispiel von Figur 2 ein zweiteiliges Kalibrierwerkzeug 8 mit den Teilen 18, 18'. Für die Kraftmesseinrichtung 17 ist eine Ausführung gemäß der Erfindung dargestellt, bei welcher diese ein Joch 26 aufweist, welches die beiden Teile, welches die beiden Teile 18, 18' des Kalibrierwerkzeugs verbindet und an welchem Joch die Kraftmessung erfolgt, indem die Verformung des Jochs ermittelt wird, die von der Kraft abhängig ist, welche jede Zarge auf das Kalibrierwerkzeug ausübt. Diese bevorzugte Ausführung mit den beiden Teilen 18 und 18'des Kalibrierwerkzeugs 8 mit und dem diese verbindenden Joch 26 ist in der vereinfachten Figur 3 besser ersichtlich. Das Joch 26 trägt in diesem Beispiel mittig einen Sensor 19, zum Beispiel einen Sensor mit Dehnungsmessstreifen, welcher so an dem Joch befestigt ist, dass er die Verformung des Jochs in ein Signal umsetzt, welches die von der Dosenzarge auf das Kalibrierwerkzeug ausgeübte Kraft angibt. Das Signal kann ein elektrisches Signal oder allenfalls ein optisches Signal sein, je nach Ausführung des Sensors. Unter dem Begriff Sensor werden hier alle Mittel verstanden, welche die kraftabhängige Verformung des Jochs - oder eines anderen Bauteils des Kalibrierwerkzeugs oder eines am Kalibrierwerkzeug angeordneten Bauteils - ermitteln können. Solche Mittel können anstelle von Dehnungsmessstreifen auch optische Sensoren oder magnetische Sensoren oder Sensoren mit auf Schallwellen basierender Messung sein. Solche Sensoren zur Messung der Verformung des Jochs oder zur Messung der Krafteinwirkung auf mindestens eine Kalibrierrolle sind dem Fachmann bekannt und werden hier nicht weiter erläutert. Das Signal des Sensors kann in der Kraftmesseinrichtung selber ausgewertet werden und in diesem Fall gibt die Kraftmesseinrichtung das bereits ausgewertete Signal weiter oder bringt das Signal zur Darstellung, zum Beispiel gemäss

Figur 4. Das Signal kann auch zur Auswertung über eine nicht dargestellte Leitung abgegeben werden, insbesondere an den Schweissmonitor 16 und/oder die Steuerung 15 und kann auch dort dargestellt werden, zum Beispiel ebenfalls gemäss Figur 4.

Gemäss der Erfindung wird das Kraftmesssignal als Angabe für die Überlappungsbreite der jeweiligen Dosenzarge verwendet, welche das Kraftmesssignal im Kalibrierwerkzeug hervorgerufen hat. Dabei ist es nicht notwendig, dass die tatsächliche Überlappungsbreite in Millimetern zahlenmässig angegeben wird. Es genügt, wenn das Kraftmesssignal die Überlappungsbreite als Angabe zur Verfügung stellt, die es erlaubt anzugeben, ob sich die Überlappungsbreite in einem Bereich befindet, der für die Schweissung der Zargenlängsnaht geeignet ist. Beziehungsweise, ob die Überlappungsbreite ausserhalb dieses Bereichs liegt.

Figur 4 zeigt ein Beispiel für den gemessenen Kraftverlauf 30 beim Durchlauf von Behälterzargen durch das Kalibrierwerkzeug. Der Kraftverlauf 30 wird als Angabe über die Überlappungsbreite bei der jeweiligen Dosenzarge verwendet und es ist ein Grenzwert 28 und ein Grenzwert 29 dargestellt, innerhalb welcher Grenzwerte die Überlappungsbreite bzw. das Kraftmesssignal liegen soll. Bei jeder Dosenzarge kann eine Kraftspitze 31 erkannt werden, wenn sie in das Kalibrierwerkzeug eintritt und ein Kraftabfall 32, wenn sie aus dem Kalibrierwerkzeug austritt. Die Verbindung zwischen Kraftspitze und dem Kraftabfall ergibt sich aus der entsprechenden Verformung des Jochs in den kleinen Abständen zwischen den einzelnen Behälterzargen. Es kann eine Anzeigeeinrichtung vorgesehen sein, welche eine Darstellung für den Bediener der Vorrichtung gemäss Figur 4 oder in ähnlicher Form zeigt. Die horizontale Achse gibt entweder die Zeit t an oder die Schweissnahtlänge. Vertikal kann die Kraft angegeben sein. Eine solche Anzeige kann bei der Kraftmesseinrichtung 17 und/oder beim Schweissmonitor 16 und/oder bei der Steuereinrichtung 15 vorgesehen werden. Anstelle einer graphischen Anzeige der Kraft im Kalibrierwerkzeug und deren bevorzugten Grenzen 28, 29 kann auch lediglich eine vereinfachte Anzeige vorgesehen sein, die der Bedienungsperson angibt, ob die Kalibrierkraft erhöht oder verringert werden soll bzw. ob die Öffnung des Kalibrierwerkzeugs verringert oder vergrössert werden soll. Die Darstellung gemäss Figur 4 oder andere Darstellungen der Kalibrierkraftmessung dienen dazu, bei der Einrichtung der Vorrichtung 1 rasch eine gute Einstellung der Vorrichtung zu finden und insbesondere eine zu hohe Kalibrierkraft bzw. zu grosse Überlappung zu vermeiden oder eine zu kleine Kalibrierkraft und somit zu geringe Überlappung zu vermeiden.

Bei der Serienherstellung von Zargen im Betrieb, wird keine Darstellung gemäss Figur 4 benötigt. Es wird aber durch den Schweissmonitor und/oder die Steuerung 15 oder allenfalls nur durch die Kraftmesseinrichtung 17 für jede Zarge festgestellt, ob deren Kraftmesswert am Kalibrierwerkzeug 8 innerhalb der vorbestimmten Grenzen liegt. Ist dies für eine Zarge nicht der Fall gewesen, so kann sie nach der Schweissung aus dem weiteren Herstellungsweg ausgeworfen werden.

Die gemäss der Erfindung ermittelte Kraftangabe bzw. Angabe der Überlappungsbreite kann somit auf verschiedene Weise genutzt werden. Einerseits kann während der Serienproduktion von Behälterzargen für jede Dosenzarge ermittelt werden, ob der von ihr bewirkte Kraftverlauf bzw. ihr Überlappungssignal innerhalb der voreingestellten Grenzen liegt. Andererseits kann die Angabe der Überlappungsbreite bei der Einrichtung der Vorrichtung 1 vor der Aufnahme der Produktion verwendet werden. Liegt die Angabe der Überlappungsbreite ausserhalb der Grenzen 28 oder 29 kann die Person, welche die Vorrichtung 1 einrichtet, das Kalibrierwerkzeug auf bekannte Weise so einstellen, dass die Überlappungsbreite innerhalb der Grenzen zu liegen kommt. Dies wird mit Testzargen durchgeführt. Zur Einstellung des Kalibrierwerkzeugs können insbesondere die beiden Teile des Werkzeugs aufeinander zu oder voneinander weg bewegt und dann in der jeweiligen Stellung fixiert werden. Dies ist - wie erwähnt - für den Fachmann bekannt und wird hier nicht weiter erläutert.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Herstellung von Behälterzargen, wobei gerundete Zargen (3 - 6) von einer Fördereinrichtung (9) zu einer Rollnahtschweissmaschine (10 - 15) transportiert werden und die Zargen vor den Schweissrollen (10, 11) der Rollnahtschweissmaschine ein Kalibrierwerkzeug (8) mit einer Mehrzahl von kranzartig angeordneten Kalibrierollen (23) durchlaufen, wobei eine Messung der von der jeweiligen Zarge auf mehrere Kalibrierrollen des Kalibrierwerkzeugs ausgeübten Kraft erfolgt, wobei die gemessene Kraft als Angabe für die Überlappungsbreite der Zarge ausgewertet wird, **dadurch gekennzeichnet, dass** das Kalibrierwerkzeug (8) zwei Teile (18, 18') umfasst, welche jeweils Kalibrierrollen tragen, und wobei die Kraft gemessen wird, welche von der jeweiligen Zarge auf die beiden Teile ausgeübt wird, wobei ein die beiden Teile verbindendes Joch (26) vorgesehen ist und die Verformung des Jochs gemessen und als gemessene Kraft verwendet wird.

2. Verfahren nach Anspruch 1, wobei die auf alle Kalibrierrollen ausgeübte Kraft gemessen wird.

3. Verfahren nach einem der Ansprüche 1 oder 2, wobei die Überschreitung oder Unterschreitung eines vorbestimmten Grenzwertes (28, 29) für die gemessene Kraft als Angabe verwendet wird, dass die Überlappungsbreite der Zarge ausserhalb eines Sollwerts liegt.

4. Verfahren nach einem der Ansprüche 1 bis 3, wobei es auf Testbehälterzargen angewendet und zur Einstellung des Kalibrierwerkzeugs vor Aufnahme der Serienproduktion von Behälterzargen angewendet wird.

5. Verfahren nach einem der Ansprüche 1 bis 3, wobei es auf Zargen während der Serienproduktion von Behälterzargen angewendet wird und Zargen, deren Überlappungsbreite ausserhalb eines vorbestimmten unteren oder oberen Grenzwerts liegen, nach der Schweissung aus der Serie entfernt werden.

6. Vorrichtung (1) zur Herstellung von Behälterzargen (3 - 6), umfassend eine Fördereinrichtung (9) zum Transport gerundeter Zargen und eine Rollnahtschweissmaschine (10 - 15), in welcher die Rohlinge mit überlappenden Rändern mittels Schweissrollen (10, 11) der Rollnahtschweissmaschinen schweissbar sind, wobei die Vorrichtung ein Kalibrierwerkzeug (8) mit einer Mehrzahl von kranzartig angeordneten Kalibrierollen (23) aufweist, welches in Transportrichtung vor den Schweissrollen der Rollnahtschweissmaschine angeordnet ist, und welches eine Kraftmesseinrichtung (17) aufweist, durch welche an mindestens einer Kalibrierrolle eine Messung und Auswertung der von der jeweiligen Zarge auf die Kalibrierrolle ausgeübten Kraft ausführbar ist, wobei durch die Kraftmesseinrichtung ein die gemessene Kraft darstellendes Signal erzeugbar ist, und dass das Signal in der Vorrichtung als Angabe für die Überlappungsbreite der Zarge auswertbar ist, **dadurch gekennzeichnet, dass** das Kalibrierwerkzeug (8) mehrteilig ausgebildet ist und die Kraftmesseinrichtung zur Messung der zwischen den Teilen des Kalibrierwerkzeugs wirkenden Kraft ausgebildet ist, wobei die Vorrichtung ein die Teile des Kalibrierwerkzeugs verbindendes Joch (26) aufweist und die Kraftmesseinrichtung zur Messung der Verformung des Jochs ausgebildet ist.

7. Vorrichtung nach Anspruch 6, wobei die Kraftmesseinrichtung zur Auswertung des Signals ausgestaltet ist.

8. Vorrichtung nach Anspruch 6 oder 7, wobei diese einen Schweissmonitor (16) aufweist, welcher mit der Kraftmesseinrichtung (17) verbunden und zur Auswertung des Kraftmesssignals ausgebildet ist.

9. Vorrichtung nach einem der Ansprüche 6 bis 8, wobei diese eine Steuereinrichtung (15) aufweist welche mit der Kraftmesseinrichtung verbunden und zur Auswertung des Kraftmesssignals ausgebildet ist.

10. Vorrichtung nach einem der Ansprüche 6 bis 9, wobei die Kraftmesseinrichtung zur Messung der auf mehrere Kalibrierrollen (23) des Kalibrierwerkzeugs (8) ausgeübten Kraft ausgebildet ist.

11. Vorrichtung nach einem der Ansprüche 6 bis 10, wobei das Kalibrierwerkzeug (8) zweiteilig ausgebildet ist.

## Claims

1. Method for producing container shells, wherein rounded shells (3 - 6) are transported from a transport installation (9) to a roll seam welding machine (10 - 15) and the shells pass through a calibration tool (8) with a plurality of calibration rollers (23) arranged in a wreath-like way before the welding rollers (10, 11) of the roll seam welding machine, wherein a measurement of the force exerted by the respective shell on multiple calibration rollers of the calibration tool is performed, wherein the measured force is evaluated as information for the overlapping width of the shell, **characterized in that** the calibration tool (8) comprises two parts (18, 18'), each of which carries calibration rollers, and wherein the force exerted by the respective shell on the two parts is measured, wherein a yoke (26) connecting the two parts is provided and the deformation of the yoke is measured and used as measured force.

2. Method according to claim 1, wherein the force exerted on all calibration rollers is measured.

3. Method according to one of the claims 1 or 2, wherein the exceedance or shortfall of a predefined threshold value (28, 29) is used as information for the measured force that the overlapping width of the shell is beyond a setpoint.

4. Method according to one of the claims 1 to 3, wherein it is applied to test container shells and is used for adjusting the calibration tool before initiating the series production of container shells.

5. Method according to one of the claims 1 to 3, wherein it is applied to shells during series production of container shells and shells with an overlapping width beyond a predefined lower or upper threshold are removed from the series after welding.

6. Device (1) for producing container shells (3 - 6), comprising a transport device (9) for transporting rounded shells and a roll seam welding machine (10 - 15), in which the blanks with overlapping edges are welded by means of welding rollers (10, 11) of the roll seam welding machine, wherein the device has a calibration tool (8) with a plurality of calibration rollers (23) arranged in a wreath-like way, which is arranged in transport direction before the welding rollers of the roll seam welding machine, and which has force measurement installation (17), by means of which a measurement and evaluation of the force exerted by the respective shell on the calibration roller is carried out at at least a calibration roller, wherein a signal reflecting the measured force is generated by the force measurement installation, and in that the signal is evaluated in the device as information for the overlapping width of the shell, **characterized in that** the calibration tool (8) is formed by multiple parts and the force measurement installation is adapted to measure the force acting between the parts of the calibration tool, wherein the device has a yoke (26) connecting the parts of the calibration tool and the force measurement installation is adapted to measure the deformation of the yoke.

7. Device according to claim 6, wherein the force measurement installation is adapted to evaluate the signal.

8. Device according to claim 6 or 7, wherein it has a welding monitor (16) which is connected to the force measurement installation (17) and is adapted to evaluate the measured force signal.

9. Device according to one of the claims 6 to 8, wherein it has a controller (15) connected to the force measurement installation and adapted to evaluate the measured force signal.

10. Device according to one of the claims 6 to 9, wherein the force measurement installation is adapted to measure the force exerted on multiple calibration rollers (23) of the calibration tool (8).

11. Device according to one of the claims 6 to 10, wherein the calibration tool (8) is formed by two parts.

## Revendications

1. Procédé de fabrication de corps de récipients, dans lequel des corps arrondis (3 - 6) sont transportés à partir d'un dispositif de transport (9) à une machine de soudage à molette (10 à 15) et les corps traversent un outil de calibrage (8) avec une pluralité de rouleaux de calibrage (23) disposés en forme de couronne devant les rouleaux de soudage (10, 11) de la machine de soudage à molette, une mesure de la force exercée par le corps respectif sur plusieurs rouleaux de calibrage de l'outil de calibrage étant effectuée, la force mesurée étant évaluée en tant qu'information pour la largeur de recouvrement du corps, **caractérisé en ce que** l'outil de calibrage (8) comprend deux parties (18, 18'), dont chacune porte des rouleaux de calibrage, et dans lequel la force exercée par le corps respectif sur les deux parties est mesurée, dans lequel un étrier (26) reliant les deux parties est prévu et la déformation de l'étrier est mesurée et utilisée comme force mesurée.

2. Procédé selon la revendication 1, dans lequel la force exercée sur tous les rouleaux de calibrage est mesurée.

3. Procédé selon l'une des revendications 1 ou 2, dans lequel le dépassement ou l'insuffisance d'une valeur seuil prédéfinie (28, 29) est utilisé comme information pour la force mesurée que la largeur de recouvrement de la coque est au-delà d'une consigne.

4. Procédé selon l'une des revendications 1 à 3, dans lequel il est appliqué à des corps de récipient de test et est utilisé pour ajuster l'outil de calibrage avant de lancer la production en série de corps de récipient.

5. Procédé selon l'une des revendications 1 à 3, dans lequel il est appliqué à des corps pendant la production en série de corps de récipients et les corps dont la largeur de recouvrement dépasse un seuil inférieur ou supérieur prédéfini sont retirées de la série après soudage.

6. Dispositif (1) pour la fabrication de corps de récipients (3-6), comprenant un dispositif de transport (9) pour le transport des corps arrondies et une machine de soudage à molette (10-15), dans laquelle les corps bruts à bords superposés sont soudés au moyen de rouleaux de soudage (10, 11) de la machine de soudage à molette, le dispositif présentant un outil de calibrage (8) avec plusieurs rouleaux de calibrage (23) disposés en forme de couronne, qui est disposé dans le sens du transport avant les rouleaux de soudage de la machine de soudage à molette, et qui présente une installation de mesure de force (17), au moyen de laquelle une mesure et une évaluation de la force exercée par le corps respectif sur le rouleau de calibrage sont effectuées sur au moins un rouleau de calibrage, dans lequel un signal reflétant la force mesurée est généré par l'installation de mesure de force, et en ce que le signal est évalué dans le dispositif en tant qu'information pour la largeur de recouvrement du corps, **caractérisé en ce que** l'outil de calibrage (8) est formé de plusieurs parties et l'installation de mesure de force est adaptée pour mesurer la force agissant entre les parties de l'outil de calibrage, dans lequel le dispositif a un étrier (26) reliant les parties de l'outil de calibrage et l'installation de mesure de force est adaptée pour mesurer la déformation de l'étrier.

7. Dispositif selon la revendication 6, dans lequel l'installation de mesure de force est adaptée pour évaluer le signal.

8. Dispositif selon la revendication 6 ou 7, dans lequel il comporte un moniteur de soudage (16) qui est relié à l'installation de mesure de force (17) et est adapté pour évaluer le signal de force mesuré.

9. Dispositif selon l'une des revendications 6 à 8, dans lequel il comporte une commande (15) reliée à l'installation de mesure de force et adapté pour évaluer le signal de force mesuré.

10. Dispositif selon l'une des revendications 6 à 9, dans lequel l'installation de mesure de force est adaptée pour mesurer la force exercée sur plusieurs rouleaux de calibrage (23) de l'outil de calibrage (8).

11. Dispositif selon l'une des revendications 6 à 10, dans lequel l'outil de calibrage (8) est formé de deux parties.
